# EUROPEAN PATENT APPLICATION

(11) **EP 1 672 562 A1**
(43) Date of publication of application: **21.06.2006**
(21) Application number: 05397025.7
(22) Date of filing: 16.12.2005
(51) Int. Cl.: G06K 7/08

(54) **A sensor head of a code reader**

(30) Priority: 20.12.2004 US 15647
(71) Applicant: Avantone Oy, 33100 Tampere (FI)
(72) Inventor: Huomo, Heikki, 90650 Oulu (FI); Strömmer, Esko, 90550 Oulu (FI)
(74) Representative: Rahkonen, Erkki Juhani

(57) **Abstract**

A sensor head (11) of a code reader (1) for reading an at least partly conductive code (2), which said sensor head (11) comprises a reading electrode (12), whose tip is arranged to couple to the code in a capacitive manner, as well as a measuring electronics (13). The measuring electronics is arranged to input signal to said reading electrode as well as to measure the response of said signal from the reading electrode in order to determine a change in the impedance between the reading electrode (12) and its surroundings. In addition, the invention relates to a corresponding method, code reader, electronic device and mobile device.

## Description

### Field of the invention

The invention relates to a sensor head of a code reader in order to read an at least partly conductive code, which said sensor head comprises a reading electrode, whose tip is arranged to couple to the code in a capacitive manner, as well as measuring electronics. The invention also relates to a method for reading an at least partly conductive code with a code reader. In addition, the invention relates to a code reader, an electronic device and a mobile device, which comprise a sensor head for reading an at least partly conductive code.

### Backaround of the invention

It is known to form different machine-readable codes for different products. One manner is to form a code from an at least partly conductive material on a less conductive base material. For example, the code can be formed with conductive ink on paper or board. The conductive code can also in some cases be covered with another surface, which can be transparent or non-transparent. The code can be read electrically by a reader device that distinguishes the more conductive code material from the less conductive base material and that is moved in relation to the code.

Different solutions have been developed for reading a conductive code. One solution is presented in the US-patent 5,159,181, which discloses a capacitive code reader. Said code reader is based on identifying the conductive code in a capacitive manner with the electrodes of the code reader, which electrodes are placed to correspond to the width of the code. Correspondingly, coupling areas are formed in the code at the locations of the electrodes of the code reader. When the code reader is at the location of the code, the electrodes of the code reader and the code form a circuit and the alternating current (AC) between the electrodes is detected. In order for it to function reliably, the solution in question requires predefined mutual alignment of the code and the code reader, as well as precise reading direction. Because of this, it is mainly suitable for so-called card reader automatons, where the card comprising the code is brought to the code reader aided by a motor. The solution does not operate reliably, for example, in such uses where the code reader is moved by hand, in which case the speed, distance, position and/or direction of movement of the code reader may vary in relation to the code.

US-patent 5,453,602 discloses a method for reading a conductive code. In the publication in question, three different implementations for reading a code are disclosed. In each disclosed solution the sensor head comprises a separate generator plate, to which the measuring electronics inputs signal, and a detector plate, from which the measuring electronics measures the response of the signal it has input, as well as in addition to these at least one grounding plate or guard plate. The disclosed solutions are somewhat large in their physical dimensions, which is why they are better suited for different card reader automatons, where the card comprising the code is brought to the code reader aided by a motor, rather than for hand-held code readers.

### Summary of the invention

Now, a solution has been invented, which enables the implementation of a mechanically simple and small sensor head.

To attain this purpose, the sensor head of the code reader according to the invention is primarily characterized in that the measuring electronics is arranged to input signal to said reading electrode, as well as to measure the response of said signal from said reading electrode in order to determine the change in the impedance between the reading electrode and its surroundings. The method according to the invention in turn is primarily characterized in that with the measuring electronic signal is input to said reading electrode and the response of said signal is measured from said reading electrode in order to determine the change in the impedance between the reading electrode and its surroundings. The code reader, the electronic device and the mobile device according to the invention are primarily characterized in that the measuring electronics is arranged to input signal to said reading electrode, as well as to measure the response of said signal from said reading electrode in order to determine the change in the impedance between the reading electrode and its surroundings.

In an advantageous embodiment of the invention, the sensor head comprises only one reading electrode and a measuring electronics. In order to read a conductive code, the capacitance between this reading electrode and its environment is measured, to which capacitance the code under the tip of the reading electrode causes a change because of the capacitive coupling between the tip of the reading electrode and the code. The measurement of capacitance takes place by inputting AC-voltage to the reading electrode, which AC-voltage creates an electric field around the tip of the reading electrode. In addition to the reading electrode, the sensor head may, if necessary, comprise one or more guard electrodes to define the electric field created by the reading electrode on the desired area in relation to the reading electrode and thus to improve the spatial resolution of the reading.

The reading electrode is in connection with the electronics of the sensor head, such as, inter alia, the pre-amplifier. The different parts of the sensor head, such as, for example, the pre-amplifier can be implemented in several different ways. A capacitance bridge is used in an embodiment. The supply voltages of the pre-amplifier are pulsed in another embodiment. A pre-amplifier based on the so-called switched capacitor technique is in turn used in an embodiment.

In an embodiment a high enough reading frequency and a sensitive enough pre-amplifier are used in reading the code, and the signal is coupled from the tip of the reading electrode to the conductive part of the code. With a sensor head implemented in this manner, it is possible to read codes with a high resolution in a reliable manner also in a hand held manner without predefined speed, position or direction of movement of the code reader. The code data read by the sensor head is collected in the control unit, which identifies the start pattern and the end pattern of the actual code in the read code information. On the basis of the geometric structure and/or the electric properties of the actual code the control unit forms the data describing the actual code.

The different embodiments of the invention offer several advantages over solutions of prior art. Depending on the implementation manner of the embodiment, the invention may provide, for example, one or more of the following advantages:
- hand-held operation is enabled, because the tip of the reading electrode does not need to be aligned with the coupling areas formed in the code to be read,
- the hand-held use is facilitated, the sensor head allows more tilting in every direction, because instead of two or more electrodes, it is enough that one electrode tip is held close to the code being read,
- the mechanical structure of the sensor head is simplified, because no separate generator electrode and detector electrode is needed,
- the spatial resolution is improved, i.e. more dense codes can be read, because the physical size of the structure formed by electrodes can be smaller, and/or
- because of a simpler structure, the manufacturing costs of the sensor head are lower.

The reading technique according to the invention can be implemented in such a manner that it does not substantially disturb the electronic devices and/or data transfer. This enables the placement of the code reader and other functions in the same structure, if necessary. For example, the code reader can be connected to a mobile device, a communication device, an electronic notebook and/or a palm computer. It is also possible that the code reader is a separate unit, which is in connection with another device, such as, for example, a mobile device, a communication device, and electronic notebook and/or a palm computer by means of a suitable data transfer technique.

### Description of the drawings

In the following, the invention will be described in more detail with reference to the appended principle drawings, in which
- Fig. 1: shows a code reader according to the invention,
- Fig. 2: shows a code reader in a block diagram,
- Fig. 3: shows the principle structure of an embodiment of the sensor head,
- Figs 4 to 7: show different chopping-amplifier electronics implementations,
- Fig. 8: shows a code reader according to another embodiment, and
- Fig. 9: shows a system.

For the sake of clarity, the figures only show the details necessary for understanding the invention. The structures and details which are not necessary for understanding the invention and which are obvious for anyone skilled in the art have been omitted from the figures in order to emphasize the characteristics of the invention.

### Detailed description of the invention

When describing a code reader 1 according to the invention, a bar code formed with conductive ink on paper is used as the code 2, the dimensions of which code are in the range of a few centimeters. The code may, however, differ from the code presented as an example, for example, in its form, size, base or conductive material.

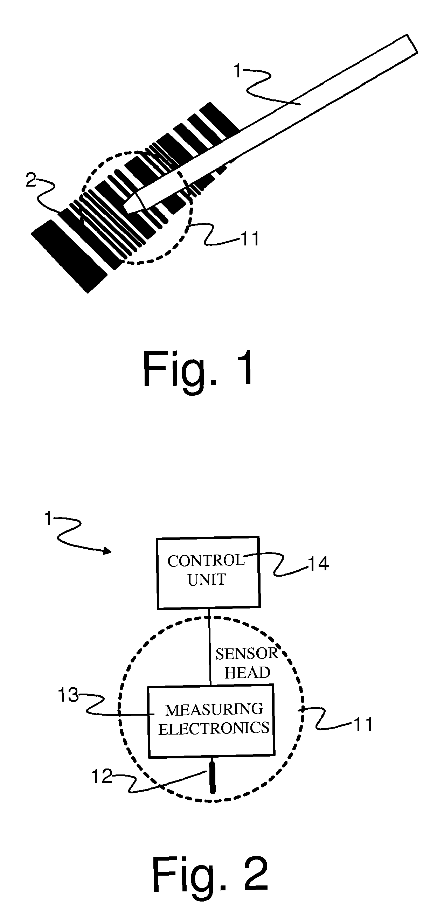

Fig. 1 shows an embodiment of a code reader 1 according to the invention, as well as a part of the conductive code 2. In the example the coder reader 1 is formed in the shape of a pen. The tip of the code reader 1 comprises a sensor head 11, where the reading electrode is located.

Fig. 2, in turn, shows an embodiment of the code reader 1 in a graph. The code reader 1 according to the example comprises a sensor head 11 and a control unit 14. The sensor head 11 comprises, inter alia, a reading electrode 12 and a measuring electronics 13. The control unit 14, in turn, comprises means for processing the data produced by the sensor head 11 in order to determine the code 2. The size and shape of the tip of the reading electrode 12 may vary, but it has been detected to be advantageous that the diameter of the tip of the electrode 12 is less than 1 mm. In practical tests the suitable measurement has been detected to be 50 to 300 µm. The tip of the reading electrode 12 can be protected with an insulator, whose thickness is advantageously some tens of micrometers at the most. The dimensions and placement of the reading electrode 12 have an effect, inter alia, on how narrow parts of the code 2 are detected with the device, and especially on how high a resolution is required from the measuring electronics 13. The measuring electronics is arranged to sense a change in the impedance between the reading electrode and its environment.

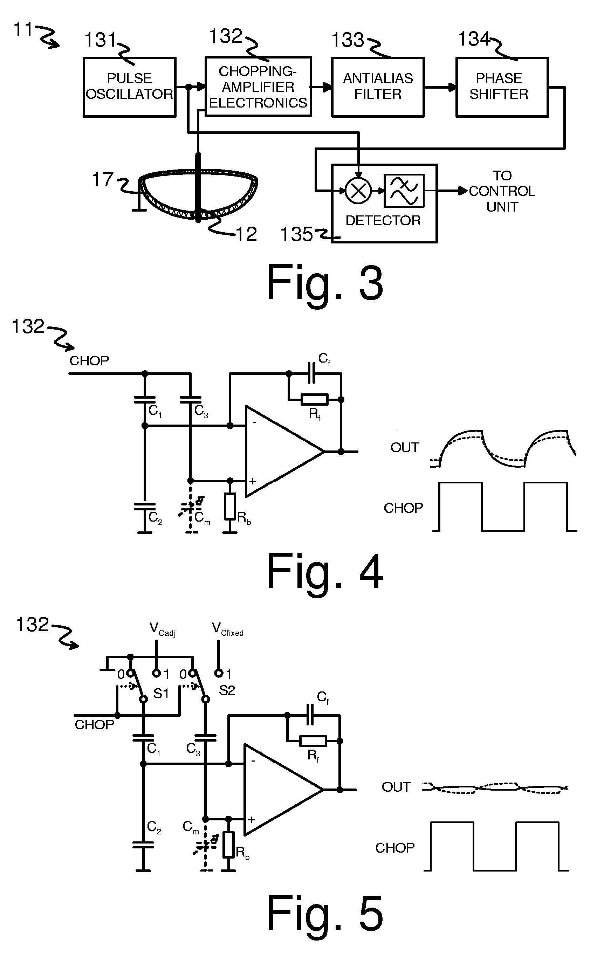

A possible structure of the sensor head 11 of the code reader 1 is shown in Fig. 3. The measuring electronics 13, comprised of blocks 131, 132, 133 134 and 135, is arranged to measure a change in the capacitive impedance between the reading electrode and its environment. The sensor head 11 also comprises one reading electrode 12, whose tip is connected in a capacitive manner to the code 2 being read. With the dimensions of the tip of the reading electrode 12 presented in connection with Fig 2, the change caused by the code 2 in the capacitance being measured is typically in the range of a few tenths of femtofarad to a few femtofarads. The pulse oscillator 131 generates AC-signal, which can be, for example, a square wave with a constant frequency and amplitude. The frequency of the pulse oscillator 131 may be, for example, 100 kHz, 1 MHz or several megahertz, depending on, for example, the type of the amplifier circuit being used. The chopping-amplifier electronics 132 inputs AC-voltage to the reading electrode 12, which creates an electric field around the tip of the reading electrode. The dimensions of the tip of the reading electrode 12 are so small that the capacitance between the reading electrode and the code 2 is substantially smaller than the capacitive coupling of the code to its surroundings. Thus, the voltage input to the reading electrode 12 does not significantly affect the electric potential of the code 2. There can be one or more guard electrodes 17 around the tip of the reading electrode, which guard electrode defines the electric field onto the desired area and thus improves the spatial resolution of reading. The guard electrodes 17 are typically connected to the ground voltage of electronics. When the conductive code 2 comes under the tip of the reading electrode 12 of the sensor head 11, a change takes place in the capacitance between the reading electrode and its surroundings. This can be seen in the output signal of the chopping-amplifier electronics 132 as a change in the amplitude and/or the signal waveform. The antialias filter 133 filters the harmonic frequencies (the multiples of the pulse oscillator 131 frequency) from this signal and at he same time also the noise on these frequencies away. The phase shifter 134 shifts the phase of the output signal of the antialias filter 133 in such a manner that the output signal of the phase shifter is in a 0 or 180 degree phase shift in comparison to the signal provided by the pulse oscillator 131. The detector 135 outputs a DC-signal proportional to the amplitude of the output signal of the phase shifter 134. Typically the detector 135 comprises a multiplier implemented by means of an analog switch and a low-pass filter following it. The identification of the code 2 is based on measuring the output signal of the detector 135. The chopping-amplifier electronics 132 mentioned in connection with Fig. 3 may be implemented in several different manners, a few advantageous examples of which are presented in the following.

Figs. 4 and 5 show a chopping-amplifier electronics 132 based on a capacitive measurement bridge, of which in Fig. 5 is presented an automatically balanced coupling. If there is a guard electrode 17 around the tip of the reading electrode 12, it can be coupled to the ground voltage of the electronics in these solutions. Also, the conductor between the reading electrode 12 and the pre-amplifier can be provided with an electrostatic shielding, which in this solution may be coupled to the ground voltage of the electronics. The reading electrode 12 is connected to the non-inverting input of the amplifier circuit, and the equivalent circuit of the reading electrode 12 is shown by the dashed capacitor Cₘ. C₁, C₂ and C₃ form a capacitive measurement bridge with Cₘ. In addition to these capacitances, the balancing of the measurement bridge is affected, inter alia, by the input capacitances of the amplifier circuit and the stray capacitances of the conductors connected to the measurement bridge, which are not drawn in the figures. C_{f} is the feedback capacitance of the pre-amplifier. R_{b} and R are the biasing resistances of the pre-amplifier. In Fig. 5, V_{cfixed} is the fixed DC-voltage and V_{cadj} the DC-voltage, by adjusting which, according to the output signal of the sensor head 11, the control unit 14 of the code reader 1 can set the measurement bridge in balance. In the arrangement according to Fig. 5, C_{f} can be smaller and thus the output of the pre-amplifier can be made more sensitive to the changes of Cₘ without the danger of exceeding the linear operating range of the amplifier circuit, for example, as a result of the temperature drift of the capacitance values of the measurement bridge. The CHOP-signal according to the waveform on the right-hand side of Figs. 4 and 5 is received from the pulse oscillator 131. When the code 2 to be read is brought under the reading electrode 12, the capacitance value of Cₘ increases, which changes the output signal of the pre-amplifier, as is illustrated in principle on the right-hand side of Figs. 4 and 5. A uniform line describes the output signal of the chopping-amplifier electronics 132 without the code under the tip of the reading electrode 12 and the dashed line the output signal of the chopping-amplifier electronics 132 when the code 2 is under the tip of the reading electrode 12. The rounding-out of the edges of the output signal is caused, inter alia, by the limited bandwidth of the amplifier circuit.

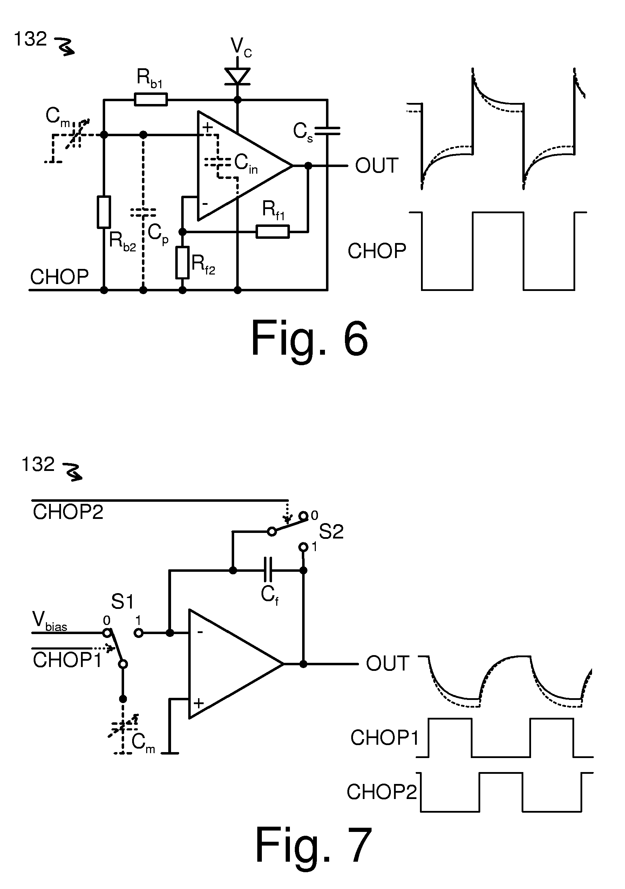

Fig. 6 shows the chopping-amplifier electronics 132 based on the chopping of the supply voltages of the pre-amplifier. If there is a guard electrode 17 around the tip of the reading electrode 12, it can be coupled to the ground voltage of the electronics in this solution. Also, the conductor between the reading electrode 12 and the pre-amplifier can be provided with an electrostatic shielding, which in this solution may be coupled to the CHOP-signal. The reading electrode 12 is connected to the non-inverting input of the amplifier circuit, and the equivalent circuit of the reading electrode 12 is shown by the dashed capacitor Cₘ. The other dashed capacitors show the equivalent circuit of the most important stray capacitances affecting the operation. Cᵢₙ is the input capacitance of the amplifier circuit, Cₚ is the stray capacitance of the conductor between the reading electrode 12 and the amplifier circuit to the other parts of the chopping-amplifier electronics 132, R_{b1} and R_{b2} are the biasing resistances of the pre-amplifier, R_{f1} and R_{f2} are the feedback resistances determining the gain of the pre-amplifier, V_{c} is the supply voltage of the sensor head and Cₛ is the capacitor rectifying the positive supply voltage for the pre-amplifier. The CHOP-signal according to the waveform on the right-hand side of the Figure is received from the pulse oscillator 131. When the code 2 to be read is brought under the tip of the reading electrode 12, the capacitance value of Cₘ increases, which changes the output signal of the pre-amplifier, as is illustrated in principle on the right-hand side of the Figure. The uniform line describes the output signal of the pre-amplifier without the code 2 under the tip of the reading electrode 12 and the dashed line the output signal of the pre-amplifier when the code is under the tip of the reading electrode. The peaks of the edges of the output signal are caused, inter alia, by the limited bandwidth of the amplifier circuit.

A pre-amplifier based on the so-called switched capacitor technique is in turn used in the embodiment according to Fig. 7. The switched capacitor technique can, especially in this solution, also be applied in the implementation of the other blocks presented in Fig. 3. If there is a guard electrode 17 around the tip of the reading electrode 12, it can be coupled to the ground voltage of the electronics in this solution. Also, the conductor between the reading electrode 12 and the pre-amplifier can be provided with an electrostatic shielding, which in this solution may be coupled to the ground voltage of electronics. The reading electrode 12 is connected to the switch S1, and the equivalent circuit of the reading electrode 12 is shown by the dashed capacitor Cₘ. The output signal of the pre-amplifier is also affected by, inter alia, the input capacitances of the amplifier circuit and the stray capacitances of the signal conductors, which are not drawn in the figures. C_{f} is the feedback capacitance of the pre-amplifier. V_{bias} is the DC-voltage. The switches S1 and S2 are controlled by the CHOP1 and CHOP2 signals received from the pulse oscillator 131 according to the signal waveform on the right-hand side of the Figure. When the code 2 to be read is brought under the reading electrode 12, the capacitance value of Cₘ increases, which changes the output signal of the pre-amplifier, as is illustrated in principle on the right-hand side of the Figure. The uniform line describes the output signal without the code 2 under the tip of the reading electrode 12 and the dashed line the output signal of the pre-amplifier when the code is under the tip of the reading electrode. The rounding-out of the edges of the output signal is caused, e.g. by the limited bandwidth of the amplifier circuit and the resistance of the switches.

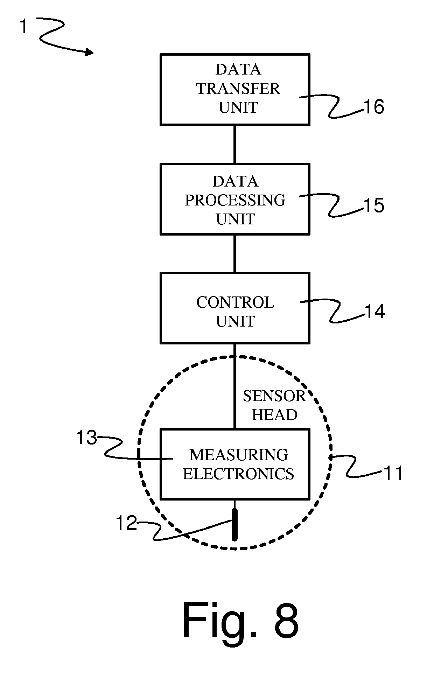

Fig. 8, in turn, shows an embodiment of the code reader 1 in a graph. The code reader 1 according to the example comprises a sensor head 11 and a control unit 14. The control unit 14 is in this embodiment in connection with the data processing unit 15, which is arranged, inter alia, to operate according to the control data comprised by the code 2. In addition, a data transfer unit 16 is shown in the example, via which the code reader 1 is in connection with other devices and/or systems.

The reading technique according to the invention can be implemented in such a manner that it does not substantially disturb the electronic devices and/or data transfer. This enables the placement of the code reader 1 and other functions in the same structure, if necessary. For example, the code reader 1 can be connected to a mobile device, a communication device, an electronic notebook and/or a palm computer. It is also possible that the code reader 1 is a separate unit, which is in connection with another device, such as, for example, a mobile device, a communication device, and electronic notebook and/or a palm computer by means of a suitable data transfer technique. In an embodiment the code reader 1 is placed in the same structure with the stylus of the touch screen, in which case it is possible to read codes and control the device with the same unit. Data can be transferred between the code reader 1 and other devices, for example, with IR (Infrared) or Bluetooth technique.

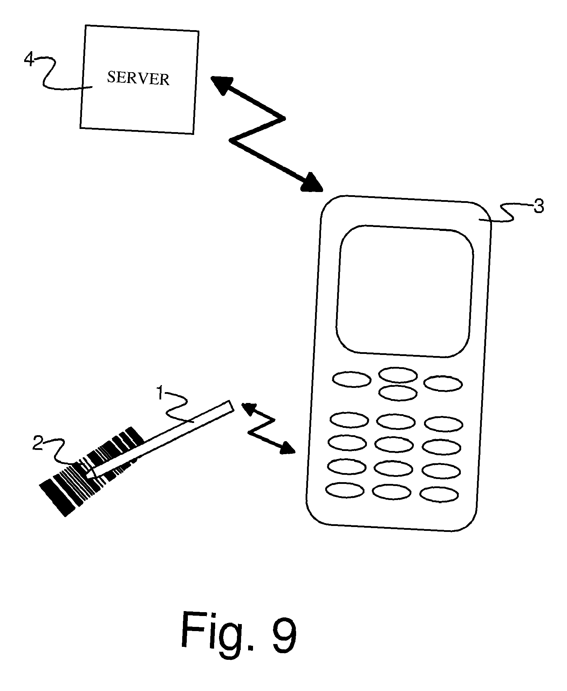

By arranging the code reader in connection with some other system, it is possible to provide and use different services. For example, Fig. 9 shows a system assembly, which comprises a code reader 1, a communication device 3 and a server 4. In the example the code reader 1 is in a data transfer connection with the communication device 3, but the devices may also be built-in. The communication device 3 is in turn arranged in connection with the server 4.

For example, with the code reader 1 it is possible to read a code 2 in a newspaper, which code comprises the address data of some page in the Internet. The code reader 1 decodes the code 2 and determines the address data in question, which is transmitted to the communication device 3. The communication device 3 in turn forms a connection to the server 4 to the page in question.

By combining, in various ways, the modes and structures disclosed in connection with the different embodiments of the invention presented above, it is possible to produce various embodiments of the invention in accordance with the spirit of the invention. Therefore, the above-presented examples must not be interpreted as restrictive to the invention, but the embodiments of the invention may be freely varied within the scope of the inventive features presented in the claims hereinbelow.

## Claims

1. A sensor head of a code reader reading an at least partly conductive code, which said sensor head comprises a reading electrode, whose tip is arranged to couple to the code in a capacitive manner, as well as a measuring electronics, wherein the measuring electronics is arranged to input signal to said reading electrode as well as to measure the response of said signal from the reading electrode in order to determine a change in the impedance between the reading electrode and its environment.

2. The sensor head according to claim 1, wherein the sensor head in addition comprises one or more guard electrodes to define the electric field created by the reading electrode.

3. The sensor head according to claim 1, wherein the measuring electronics comprises a chopping-amplifier electronics for forming the signal, which a chopping-amplifier electronics is based on a capacitive measurement bridge.

4. The sensor head according to claim 1, wherein the measuring electronics comprises a chopping-amplifier electronics for forming the signal, which a chopping-amplifier electronics is based on the chopping of supply voltages.

5. The sensor head according to claim 1, wherein the measuring electronics comprises a chopping-amplifier electronics for forming the signal, which a chopping-amplifier electronics is based on switched capacitor technique.

6. A method for reading an at least partly conductive code with a code reader, whose sensor head comprises at least a reading electrode, whose tip can be arranged to couple to the code in a capacitive manner, as well as a measuring electronics, wherein a signal is input to said reading electrode with the measuring electronics and the response of said signal is measured from the reading electrode in order to determine a change in the impedance between the reading electrode and its surroundings.

7. The method according to claim 6, wherein the sensor head in addition comprises one or more guard electrode to define the electric field created by the reading electrode.

8. The method according to claim 6, wherein the signal is formed with a measuring electronics, which comprises a chopping-amplifier electronics based on a capacitive measurement bridge.

9. The method according to claim 6, wherein the signal is formed with a measuring electronics, which comprises a chopping-amplifier electronics based on the chopping of supply voltages.

10. The method according to claim 6, wherein the signal is formed with a measuring electronics, which comprises a chopping-amplifier electronics based on switched capacitor technique.

11. A code reader for reading an at least partly conductive code, which said device comprises a reading electrode, whose tip is arranged to couple to the code in a capacitive manner, as well as a measuring electronics, wherein the measuring electronics is arranged to input signal to said reading electrode as well as to measure the response of said signal from the reading electrode in order to determine a change in the impedance between the reading electrode and its surroundings.

12. An electronic device, which comprises a sensor head for reading an at least partly conductive code, which said sensor head comprises a reading electrode, whose tip is arranged to couple to the code in a capacitive manner, as well as a measuring electronics, wherein the measuring electronics is arranged to input signal to said reading electrode as well as to measure the response of said signal from the reading electrode in order to determine a change in the impedance between the reading electrode and its surroundings.

13. A mobile device, which comprises a sensor head for reading an at least partly conductive code, which said sensor head comprises a reading electrode, whose tip is arranged to couple to the code in a capacitive manner, as well as a measuring electronics, wherein the measuring electronics is arranged to input signal to said reading electrode as well as to measure the response of said signal from the reading electrode in order to determine a change in the impedance between the reading electrode and its surroundings.
